# EUROPEAN PATENT SPECIFICATION

(11) **EP 0 835 466 B1**
(45) Date of publication and mention of the grant of the patent: **10.11.1999**
(21) Application number: 96918558.6
(22) Date of filing: 19.06.1996
(51) Int. Cl.: G02B 5/28

(54) **MULTILAYER THIN FILM BANDPASS FILTER**
MEHRSCHICHTIGES DÜNNSCHICHTBANDPASSFILTER
FILTRE PASSE-BANDE A FILM MINCE MULTICOUCHE

(30) Priority: 28.06.1995 US 496097; 18.09.1995 US 529449
(43) Date of publication of application: 15.04.1998
(60) Divisional application: 99108318.9
(73) Proprietor: JDS FITEL INC., Nepean, Ontario K2G 5W8 (CA)
(72) Inventor: CUSHING, David, Henry, Greely, Ontario K4P 1B6 (CA)
(74) Representative: Frei, Alexandra Sarah
(86) International application number: PCT/CA96/00415
(87) International publication number: WO 97/01777

(56) References cited:
- GB-A- 2 137 769
- THIN SOLID FILMS, vol. 85, no. 2, November 1981, pages 97-110, XP002013358 J.M. SAUREL: "PROPRIETES GENERALES DES FILTRES INTERFERENTIELS TYPE MULTI-DEMI-ONDE: CLASSIFICATION ET RECHERCHE DES MEILLEURS TYPES D'EMPILEMENTS"
- PATENT ABSTRACTS OF JAPAN vol. 13, no. 322 (P-902), 20 July 1989 & JP,A,01 091104 (FUJITSU)
- APPLIED OPTICS, vol. 21, no. 16, 15 August 1992,, pages 2965 - 2967, XP002013359 PHILIP BAUMEISTER 'Use of microwave prototype filters to design multilayer dielectric bandpass filters'

## Description

### Field of the Invention

This invention relates to dielectric bandpass filters, and more particularly to multi-layer multi-cavity structures that reduce transmission ripple in the passband.

### Background of the Invention

Optical interference, that modifies the transmitted and reflected intensities of light, occurs with the superposition of two or more beams of light. The principle of superposition states that the resultant amplitude is the sum of the amplitudes of the individual beams. The brilliant colors, for example, which may be seen when light is reflected from a soap bubble or from a thin layer of oil floating on water are produced by interference effects between two trains of light waves. The light waves are reflected at opposite surfaces of the thin film of soap solution or oil.

More importantly, a practical application for interference effects in thin films involves the production of coated optical surfaces. When a film of a transparent substance is deposited on transparent substrate such as glass, for example, with a refractive index which is properly specified relative to the refractive index of the glass and with a thickness which is one quarter of a particular wavelength of light in the film, the reflection of that wavelength of light from the glass surface can be almost completely suppressed. The light which would otherwise be reflected is not absorbed by a non-reflecting film; rather, the energy in the incident light is redistributed so that a decrease in reflection is accompanied by a concomitant increase in the intensity of the light which is transmitted.

Considerable improvements have been achieved in the anti-reflective performance of such films by using a composite film having two or more superimposed layers. Two different materials may be used in fabricating such a composite film, one with a relatively high index of refraction and the other with a relatively low index of refraction. The two materials are alternately deposited to predetermined thickness' to obtain desired optical characteristics for the film. In theory, it is possible with this approach to design multi-layer interference coatings for a great variety of transmission and reflection spectrums. This has led to the development of many new optical devices making use of complex spectral filter structures. Anti-reflection coatings, laser dielectric mirrors, television camera edge filters, optical bandpass filters, and band rejection filters are some of the examples of useful devices employing thin film interference coatings.

One particular type of interference coating is the bandpass filter, which is designed to allow wavelengths within a predetermined range of the desired passband to be transmitted, while a range of wavelengths on either side of the pass band are highly reflected. Ideally a bandpass filters should be square in its response; thus, the transition from the rejection regions to the passband should be as rapid as possible, or expressed differently. the slope or transition region should be as steep as possible, while obtaining a pass band region that is uniform having little or no ripple.

Multi-cavity filters have been manufactured for more than 40 years. A usual approach of filter designers has been to simply anti-reflect equal length cavity structures to the substrate and the exit medium. However, this yields filters with excessive ripple in the passband. In an attempt to obviate this problem, the need to modify the cavity lengths was investigated thoroughly by experts in the thin film field. P. W. Baumeister in a paper entitled "Use of microwave prototype filters to design multilayer dielectric bandpass filters", published in Applied Optics Vol. 21, No. 16, August 15, 1982, describes the use of a standing wave ratio technique to match reflective zones applying microwave filter synthesis. C. Jacobs in an article entitled "Dielectric square bandpass design", in Applied Optics, Vol. 20, No. 6 March 15, 1981, describes the use of an effective index approach. A. Thelen in a book entitled Design of Optical Interference Coatings. McGraw-Hill Book Company 1989. describes equivalent layers and other schemes to reduce ripple. However. the layer sequences developed from these methods are not considered to be general and do not apply equally well for different ratios of index of refraction of the multilayers.

Another prior art filter is disclosed in U.K. Patent Application number 2 137 769 A in the name of the applicant VEB Carl Zeiss, filed March 27, 1984. This application discloses an interference filter having a passband. and comprises a multi-layer filter, which is somewhat more difficult to manufacture than applicant's disclosed hereafter.

Generally, procedures that result in high transmission reduce the bandwidth of this transmission at the expense of poor slopes (i.e. a slow rate of change) in the transition to blocking. Since the improvement in transmission outweighs the change in slope, additional cavities may be added to a filter to improve the slope.

In view of the limitations of the prior art, it is an object of this invention to provide a bandpass filter that overcomes many of these limitations.

Furthermore, it is an object of this invention to provide a bandpass filter in the form of a multi-layer, multi-cavity structure that reduces transmission ripple in the passband normally associated with other bandpass filters.

Furthermore, it is an object of this invention to provide a bandpass filter in the form of a multi-layer, multi-cavity structure that reduces transmission ripple in the passband and provides better slopes than those normally associated with other bandpass filter designs with reduced ripple.

### Summary of the Invention

The present invention is comprised of a multilayer film of alternating layers of two (or more) transparent dielectric films with dissimilar indices of refraction. The invention utilizes anti-reflection from the filter structure to the substrate and output interfaces (if necessary) and also utilizes outer cavities with four layers less than the inner core structure on both sides of the core structure, to produce a low reflection profile in the passband. The squarest filters would have extra half waves added to various layers in selected cavities. The band passes for any of these designs will reduce the bandwidth of transmission compared to equal length cavity structures.

The filter as described has a much better slope in the high transmission zone than those cited above in the background information (for filters with reduced ripple). The above noted structure is a very general approach to the design of high transmission filters with very steep slopes.

Advantageously, the filter as described in accordance with the invention has a much better slope than those of the aforementioned prior art. The desired results are produced with virtually any suitable materials that are transparent in the spectral area of interest.

In accordance with the invention, there is provided a bandpass filter as defined in claim 1.

Further embodiments of the invention are defined in the dependent claims.

The multiple halfwaves of the outer cavities may have the same number of half-waves as the inner cavities or may have more half waves. Additionally half-wave layers are added to selected quarter-wave layers in the outer cavities to alter the slope of the passband. Also half-wave layers are positioned in the inner cavities and are added to selected quarter-wave layers to remove ripple induced by the altered outer cavities.

### Brief Description of the Drawings

Exemplary embodiments of the invention will now be described in conjunction with the drawings, in which:
Fig. 1a is a cross sectional view of a prior art bandpass filter ensemble;
Fig. 1b is a cross sectional view of a bandpass filter ensemble in accordance with the invention;
Fig. 2 is a cross sectional view of a solid etalon filter in accordance with the prior art;
Fig. 3 is a cross sectional view of a prior art quarter-wave stack (QWS);
Fig. 4 is a cross sectional view of a prior art dielectric filter cavity;
Fig. 4b is a cross sectional view of a dielectric filter cavity in accordance with this invention.
Fig. 5a is a cross sectional view of a prior art multi-cavity filter;
Fig. 5b is a cross sectional view of a multi-cavity filter in accordance with the invention;
Fig. 6 is a graph of transmittance versus wavelength of a conventional five cavity filter each cavity with thirteen layers separated by low index quarter-wave layers;
Fig. 7a is a graph of transmittance versus wavelength for a structure having a nine layer cavity, three thirteen layer cavities. and a second nine layer cavity in accordance with this invention;
Fig. 7b is a graph *of* transmittance versus wavelength for a four cavity structure (heavy line) having an eleven layer cavity, two fifteen layer cavities. and a second eleven layer cavity in accordance with this invention consisting of 55 layers with 79 quarter-waves. The light line is the same cavity structure with no added half-waves;
Fig. 8 is a chart (heavy line) representing a 55 layer four cavity filter with 79 quarter-waves designed in accordance with the invention. The substrate is silicon and the emerging medium is air. A light line demonstrates the filter of Fig. 7 embedded in glass for comparison;
Fig. 9a is a graph of transmittance versus wavelength of a 97 layer 7 cavity conventional prior art (light line) filter vs. 91 layer modified cavity (heavy line )filter in accordance with the invention. having low index layers added between the filter and the mediums in the modified structure type;
Fig. 9b is a chart representing a 73 layer four cavity filter with 90 quarter-waves designed in accordance with the invention;
Fig. 10a is a graph of transmittance versus wavelength for a 62 layer five cavity filter;
Fig. 10b is a chart representing a 89 layer four cavity filter with 107 quarter-waves designed in accordance with the invention;

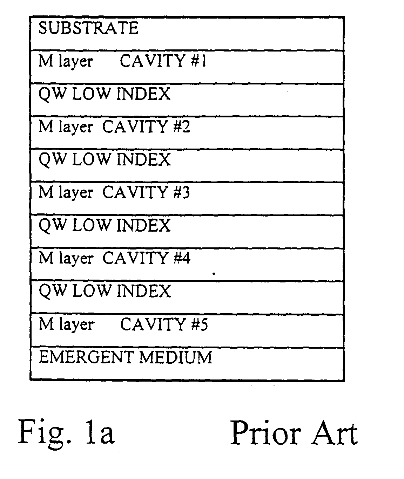

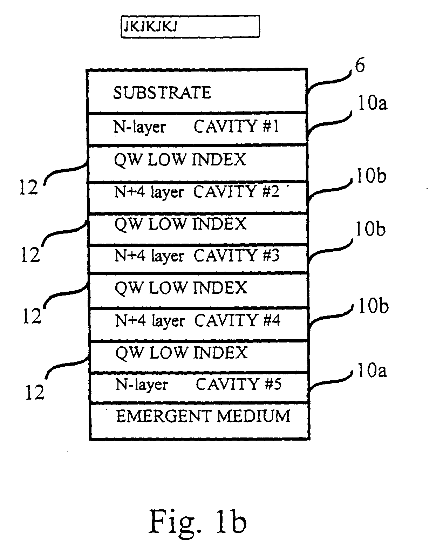

Fig. 1 la is a graph of transmittance versus wavelength for a 105 layer bandpass filter with an eight cavity (modified);

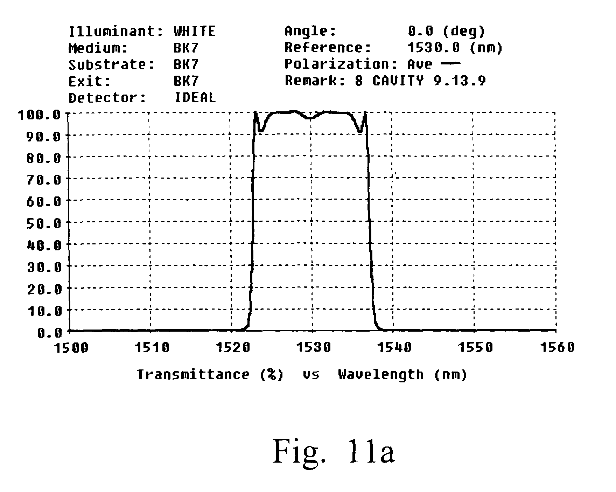

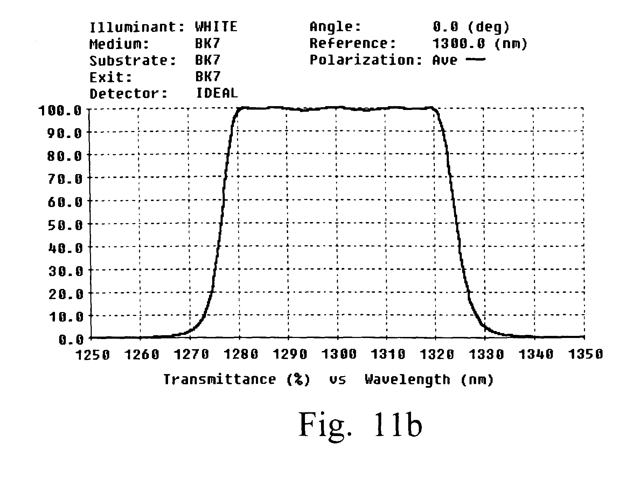

Fig. 11b is a graph of transmittance versus wavelength for a 51 layer bandpass filter with a five cavity structure utilizing Tantalum Pentoxide and Silicon Dioxide for materials; and,

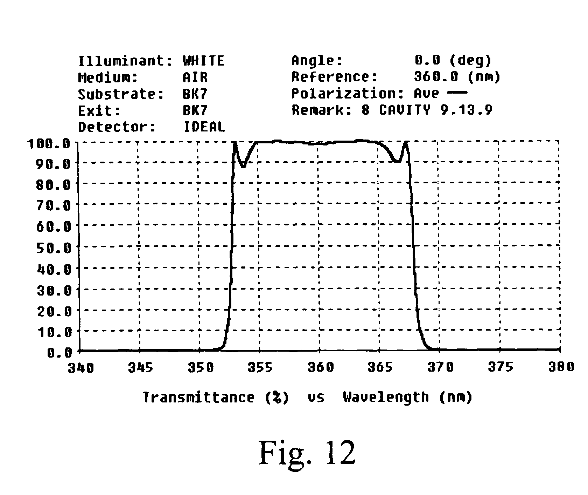

Fig. 12 is a graph of transmittance versus wavelength for an eight cavity filter.

### General Information about Filter Construction

Filters for wavelength division multiplexers and other communication industry applications require very straight slopes with low loss and virtually no ripple. Typical bandwidths range from 0.5 nm to 100 nm for the wavelength range 1250 to 1650 nm. There are many other applications for filters that would benefit from this improvement in technology that is provided by this invention.

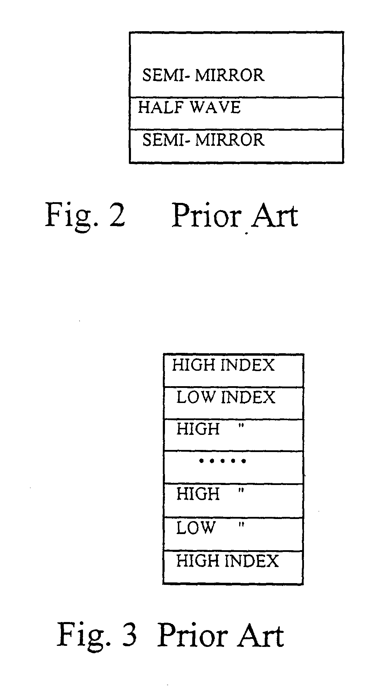

The simplest filter, shown in prior art Fig. 2, consists of two partial-reflectors or semi-mirrors separated by a half wave layer of transparent dielectric material (similar to an Etalon).

Turning now to Fig. 3, for all-dielectric filters, the partial-reflector shown consists of alternating layers of high and low index materials. The thickness of each layer is adjusted to be a quarter-wave (QW) at the wavelength of the desired filter. Each partial-reflector (which may be comprised of only a single layer) is called a quarter-wave stack. The bandwidth of the filter is a function of the reflectance of quarter-wave stacks in the structure.

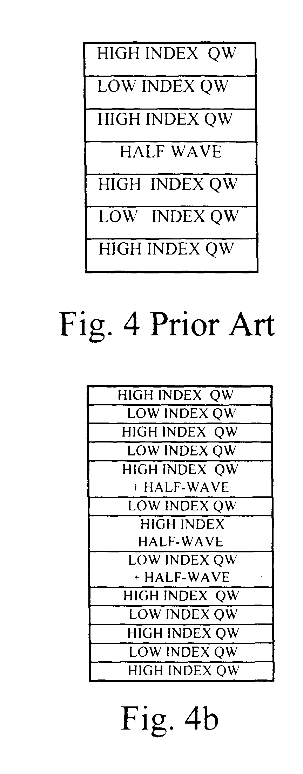

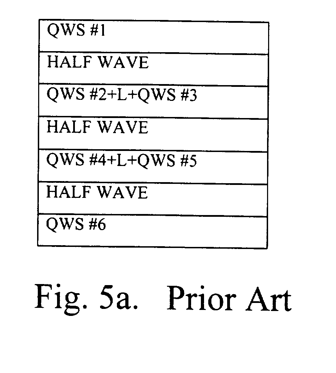

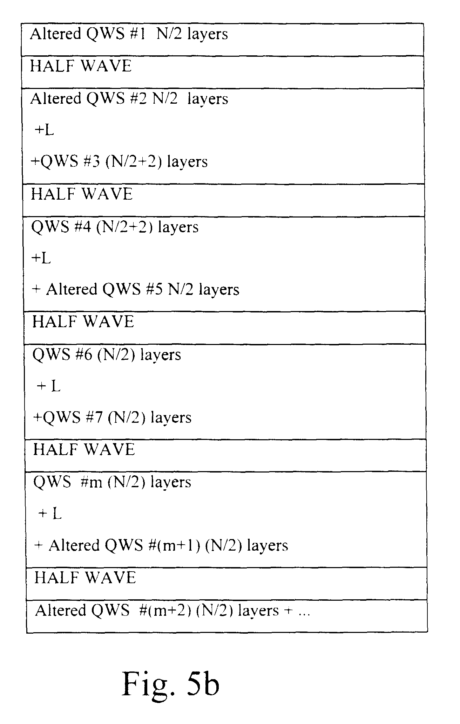

Referring now to Fig. 4, a filter cavity, one of the most ubiquitous and basic building blocks for all-dielectric interference filters, is shown. The cavity is comprised of two identical reflectors made from quarter-wave stacks separated by a half wave (or multiple half-wave) layer, as is seen in Fig. 4. Cavities are deposited on top of other cavities, with a quarter-wave layer of low index material between, to sharpen the slopes. This produces a multi-cavity filter shown in Fig. 5a.

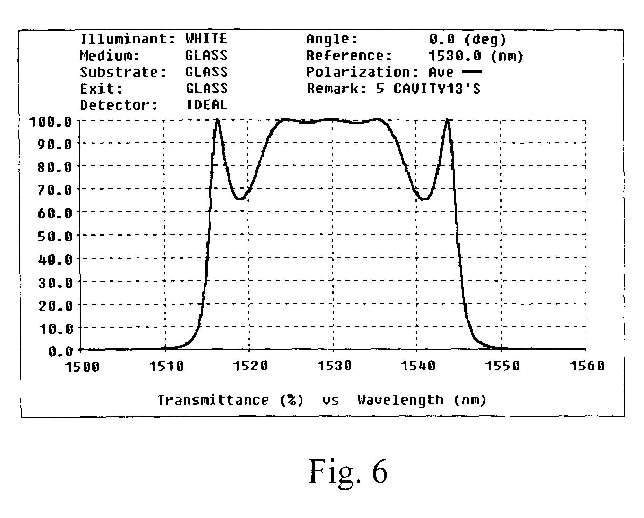

From a practical point of view, the total number of layers to be deposited controls the number of cavities possible. At 0.3 nm bandwidth and greater, multi-cavity designs are possible. Filters up to 10 nm bandwidth may be made easily with 3 or 4 cavities. For greater than 6 nm, even more cavities may be necessary to achieve the slopes for blocking the transmission of unwanted wavelengths of light. These filters have a large number of layers. Surface area yield is small and 25 mm diameter may be typical for the narrower bands. Equal length cavities produce the best roll-off with the broadest pass-zones, but examination of the graphs for equal cavity filters demonstrates that improvement is needed to reduce ripple in the passband to acceptable levels as shown in Fig. 6.

### Detailed Description of the Invention

As shown in Fig. 1b, the filter ensemble of the invention includes: a transparent substrate 6. an optional matching layer above the substrate. if necessary (,not shown); an outer filter cavity 10a having N layers. where N≥3 and the thickness of some of the layers may be three quarter-wave; a low refractive index layer 12; a series of filter core cavities 10b each having (N+4) layers, a layer 12 having a low refractive index between adjacent cavities 10a, 10b; another outer filter cavity 10a having N layers and the thickness of some of the layers may be three quarter-waves; and, another matching layer if necessary(, not shown). Half-wave layers are interspersed in the quarter-wave stacks to improve the slope. The number of and position of these added half-waves will vary with individual applications. In contrast, prior art Fig. 1a, shows a conventional filter having 5 cavities, each cavity having M layers including the outermost cavities.

Referring again to Fig. 1b of the invention, generally, the optional matching layer is a low refractive index material having a thickness of a quarter-wave. However, material, thickness, and index of refraction of the matching layer(s) may be different from that of the low index material 12. The cavities 10a and 10b comprise alternating quarter-wave thick layers of high and low index materials. The first material in a cavity 10a is high index and is followed by a low index material. For the simplest case the low index material is a multiple of half waves and is followed by a high index material i.e. HLLH; each layer indicating a quarter-wave thick high or low index material. Thus, HLLH is considered to be a three layer structure, having a half wave layer LL of low refractive index material disposed between two layers H H, each a quarter-wave thick of high refractive index material. To improve the slope, the H layers are changed to HHH layers: the LL layers are changed to an LLLL layer. Next, the low index layer 12 is disposed between each cavity 10a and/or 10b that follows. The next core cavity 10b is of the layer structure HLH LL HLH in the simplest case. Hence, the core cavity 10b is considered to be a seven-layer structure, having a half wave layer LL disposed between two HLH, quarter-wave layers stacks. To reduce ripple introduced by the added half-wave layers some of the layers in the core cavities shall also have half-wave layers added to them. The core cavity 10b may be repeated many times to produce a filter having sharp slopes. The first cavity 10a is then repeated; and, finally another matching layer to the next medium is added as necessary.

The substrate 6 is transparent over the wavelength of interest and may be made from a wide variety of materials including but not limited to glass, quartz, clear plastic, silicon, and germanium. The dielectric materials for this application have indices of refraction in the range 1.3 to greater than 4.0. The preferred materials are Magnesium Fluoride (1.38), Thorium Fluoride (1.47), Cryolith (1.35), Silicon Dioxide (1.46), Aluminum Oxide (1.63), Hafnium Oxide (1.85), Tantalum Pentoxide (2.05), Niobium Oxide (2.19), Zinc Sulphide (2.27), Titanium Oxide (2.37), Silicon (3.5), Germanium (4.0), and Lead Telluride (5.0). Other dielectric materials would serve as well.

After establishing the number of layers in each cavity, in accordance with the teaching of this invention, the design of the filter is easily accomplished with the aid of a commercially available computer program with optimization routines (for example, TFCalc™ by Software Spectra Inc.). Design recipes are entered into the program and a spectral response is calculated. When the design with the proper size cavities is selected to match the required nominal bandwidth, optimization of the filter transmission is performed for the matching layers. A designer selects from a choice of materials to use in a quarter-wave match or may choose to use the same low index material with thickness adjustments to accomplish the matching.

The filter of Fig. 1b includes of an array of cavities, each separated by quarter-waves of low index material. The number of layers in the core cavities 10b is an odd number and has to be more than five. The improvement in lessening ripple is quite pronounced for core cavities 10b with more than seven layers. In accordance with this invention. the first and last cavities 10a will have two less layers in each quarter-wave stack for a total of four less layers in each cavity. The number of half waves in these outer cavities 10a should be the same as. or more than. those in the core stack(s) 10b. Theoretical plots will determine the optimum number of half waves for each situation. Additional half-waves are attached to quarter-wave layers in the outer stacks yielding three-quarter-wave layers to improve the slope. However, this introduces ripple. Nevertheless when the slope is satisfactory, the ripple may be reduced by adding more half waves to quarter-waves in the inner stacks thereby yielding three-quarter-wave layers.

When the general attributes of the filter are satisfactory, the position of the added multiple waves may be tested for angular sensitivity. Altering the positions slightly may provide vastly improved filter properties for a variety of angles of incidence.

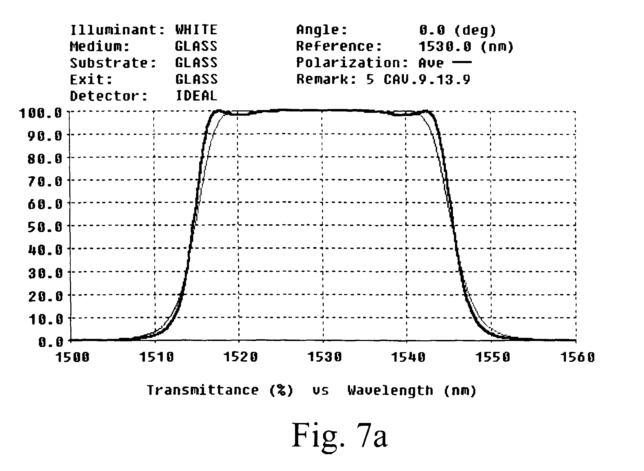

Fig. 7a shows the transmission profile of a bandpass filter having three thirteen layer core stacks and nine layer outer stacks. The 9 layer outer stacks have either one or two half waves. The transmission profile for the two half waves or full wave stacks are indicated by the heavy line, and the transmission profile for the half wave stacks are shown by a lighter line. The substrate and medium are glass and each have an index of 1.51 . The improvement in transmission results is clear.

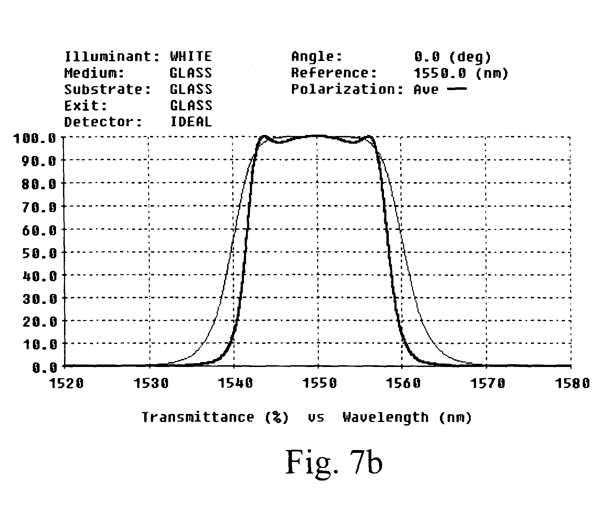

Fig. 7b (heavy line) shows the transmission profile of a bandpass filter having two fifteen layer core stacks and eleven layer outer stacks. The 11 layer outer stacks have the form of HLH 3L 3H 4L H 3L HLH with H representing a quarter-wave optical thickness layer of high index material; 3H indicates an additional half-wave of high index material; L indicates a quarter-wave optical thickness of low index material; etc. The inner stacks consist of HLHLHLH LL HL (LL) HLHLH with the (LL) added only in one cavity. This (LL) could be in front of the half-wave in the same position to produce the same effect. The high index material has an index of refraction of 2.24 and the low index material has an index of 1.45. The light line indicates the spectral characteristics of the basic filter with layers numbering 11-15-15-11 with half waves only. The substrate and medium are glass and each has an index of 1.51. The improvement of the slope with minor ripple in the transmission zone is obvious. The bandwidth at half-power points has essentially not changed, but out of band blocking at points further removed is substantially better.

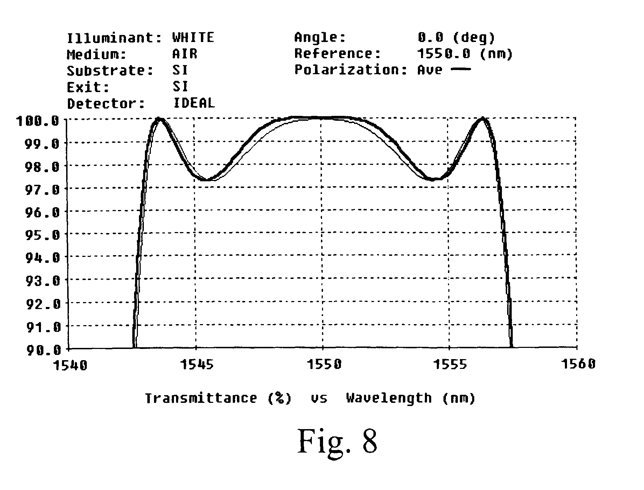

The index of refraction of the substrate and the emergent (or exit) medium will affect the ripple. To reduce ripple to a minimum, it may be necessary to match the filter structure to the emergent medium. For example, when the refractive index n of the emergent medium is between 1.44 and 1.8 a quarter-wave layer of the low index material (for a low index material with an index of approximately 1.48 or less) may provide suitable matching. For indices of refraction greater than approximately 1.8 or less than approximately 1.44, layer changes are necessary between the medium and the filter. This particular problem is well known and has been addressed by those proficient in the art. Fig. 8 demonstrate the effect of matching a filter with an exit medium. The same four-cavity filter from Fig. 7b is matched to a silicon substrate by removing layer 1. It is also matched to an emerging medium air with anti-reflection matching layers comprising a 0.7185 quarter-wave of ZnS for layer 54 and adding layer 55 of 0.643 quarter-wave of ThF4. The ripple in the passband is virtually identical to that in Fig. 7b. For any substrates and exit mediums structure changes next to the mediums enhance the performance of the filter such that the indices of the substrate and output medium are not obstacles.

### Examples

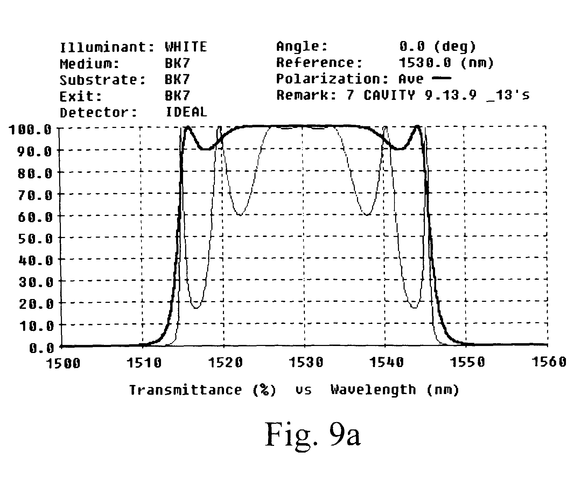

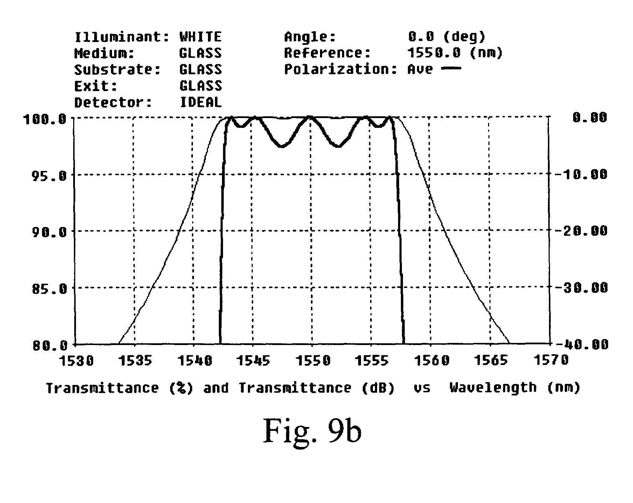

Using Zinc Sulfide (with an index of 2.24) and Thorium Fluoride (with an index of 1.45) for the multi-layers. a seven cavity filter was calculated with and without ripple reducing end cavities (with extra low index layers added to ends). The ripple reduction is considerable as is seen in Fig. 9**a**.

A five-cavity filter was calculated with various substrates. Fig. 7a indicates the performance for immersion in glass with an index of 1.51 . If the mediums have an index of refraction between 1.45 and 1.8 for 5 cavity filters, transmission is in excess of 98% from 1518 nm to 1542 nm with low index layers added to the beginning and the end of the filter recipe.

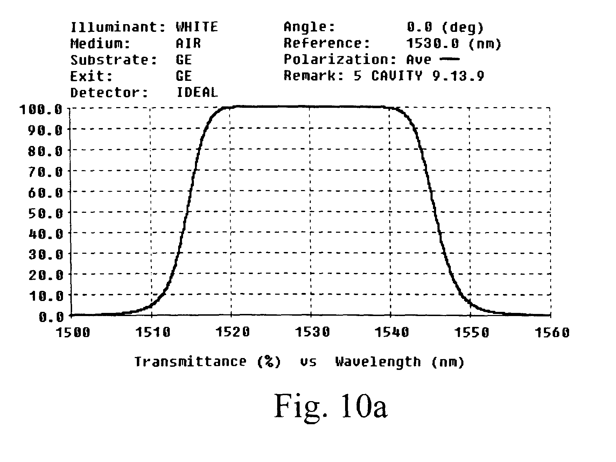

For the same five cavity structure changing the index of refraction of the substrate to 4.0 (Germanium) and the emergent medium to air (index of 1.0) the computer program was utilized to optimize the thickness of the first two and last two layers of the filter. Fig. 10a demonstrates that after anti-reflection, the filter properties are not appreciably altered from the results shown in Fig. 7a.

The output response for an eight cavity filter constructed with Silicon for a high index (n= 3.5) and Silicon Monoxide for a low index (n= 1.85) consisting of 105 layers is shown in Fig. 11**a**. Although there is some ripple in the passband, the transmission is much better than conventional cavity filters. Full waves are used to remove ripple.

The output response for an eight cavity filter using Hafnium Oxide (n=1.9) and Quartz (n= 1.46) with Magnesium Fluoride on the ends is illustrated in Fig. 12 wherein the materials are Hafnium Oxide (n= 1.85) and Quartz (n= 1.44), the filter having layers of Magnesium Fluoride (n= 1.38) added between the filter and the medium. These and the next inner layers of HfO2 have their thickness adjusted to match the mediums. The first and last layers are Magnesium Fluoride. They, along with the next inner layers are matched to the mediums.

A comparison with Fig. 11**a** demonstrates that the basic band shape (output response) is practically independent of both the ratio of the indices of refraction and also the absolute values of each index of refraction. Comparisons of changing the high index with a constant low index show minor changes in the reflection value at the peak within the passband.

Using Zinc Sulfide (with an index of 2.24) and Thorium Fluoride (with an index of 1.45) for the multi-layers, various four cavity filters were calculated for different amounts and positions of added half-waves.

The filters in accordance with this invention are comprised of an array of equal length cavities (the same number of layers) for all but the outer cavities. The outer cavities contain four less layers each (two less on each side of the half-wave). The shape of the bandpass for this configuration is a smooth graph with low ripple, if any. The slope of the resulting graph may be defined arbitrarily by analyzing the bandwidths at convenient percent transmittance positions. For the purpose of comparison we will define the bandwidth ratio for 0.01% T to 50%, It will be named S for shape.

The bandwidth ratio S is much smaller for filters with all equal length cavities than for filter structures that have been altered to improve ripple. For filters with less layers in the outer cavities, adding half-waves to the half waves of the outer cavities considerably improves the ratio. Further improvement of the bandwidth at the 0.01% points (and all others in between) may be accomplished by adding half-wave thickness' to the layers that comprise the quarter-wave stacks of the outer cavities in particular. These become three quarter-waves thick. This adds ripple to the bandpass, but the value can be controlled by varying the number and position of the added half-waves. In addition, control of the ripple is affected by added half-waves on the inner cavities. The band-factor is degraded simultaneously. therefore use of this design tool must be considered on a case by case basis.

By defining band shape S= (bandwidth @ 0.01%T) / (bandwidth @50%T) and ripple R= 100% - %T @ minimum in the passband. comparisons may be made between filter types. In addition to the above factors, the total number of quarter-waves and the total number of layers should be minimized. In order to gauge bandwidth improvement with additional half-waves in the quarter-wave structure, basic bandwidth information must be evaluated first. To illustrate this using Zinc Sulfide- Thorium Fluoride multi-layer filters with 15 layers for cavities :
four cavil -- 15 layers each: S=2.35 R=81%
this contains 63 layers with 67 quarter-waves
These are benchmarks. None of the following four cavity designs can have a better slope than this.
Comparisons are configured as below:
four cavity type of 11-15-15-11 layers: S=3.37 R=99.8% (case 1)
with all half waves (2-2-2-2), with matching to the mediums, this is 57 layers with 61 quarter-waves.

To improve this factor the half waves for the first and last cavities may be changed to full waves (or more).
four cavity type as in case 1, but altering the half-waves to:
# of quarter-waves of 4-2-2-4 in the cavities: S=2.85 R=99.6% (case 2)
with matching to the mediums, this is 57 layers with 63 quarter-waves.

The shape may be further improved by also adding half waves to certain layers in the quarter-wave stacks. If the objectives are not too demanding, satisfactory characteristics may be achieved with a few added layers and other desirable affects will also result.

Strictly using the least amount of added layers for improved shape factor :
ZTZT 3Z 4T 3Z TZTZ for the first and last cavities R=95% and S= 2.6
this contains 55 layers with 71 quarter-waves and :
ZTZ 3T 3Z 2T 3Z 3T ZTZ for the first and last cavities R=95% and S= 2.62 this has 55 layers with 75 quarter-waves.

These filter characteristics are reasonable for most applications. For fiber optics communications less ripple is desirable. Better Ripple factors require less three-quarter or half wave layers and filters with very low ripple will have S values near 2.85. For instance, ZTZ 3T 3Z 2T ZTZTZ outer cavities give results similar to the 4-2-2-4 type.
R=99.5 % S= 2.85 .
Changing the outer cavities to: ZTZ 3T 3Z 2T 3Z TZTZ produces intermediate results of:
R=97.6% and S=2.74.

Moving the three quarter-waves away from the half wave smoothes the ripple but the bandshape ratio degrades. For general applications it is desirable for filters to have very small changes in properties as the angle of incidence of light is changed. The first filter discussed (CASE 1) has no transmission loss or band-factor change at angles including 13 degrees.

If full waves are used as in CASE 2, a 10% transmission loss results at 13 degrees.

For first and last cavities of: ZTZ 3T 3Z 2T ZTZTZ, 4% transmission loss results at 13 degrees. Various structures were investigated and the best all around properties follow.

For the type : ZTZ 3T 3Z 4T Z 3T ZTZ for outer cavities, and one half-wave added to either of the inner cavities at a position of the second layer away from the half-wave in any direction. A filter with 55 layers consisting of 79 quarter-waves results. Transmission is preserved at 13 degrees with 96% T, ripple R= 97.5% min. and shape-factor S=2.72.

This is illustrated in Fig. 7b.

Filters with a ripple factor R= 92% min. and a ratio of S=2.55 result for :
Z 3T 3Z 3T 3Z 2T 3Z 3T 3Z 3T Z
for the first and last cavities.

This adds 32 quarter-waves to the filter for a total of 87. Adding one more cavity instead would have more benefits.

A five cavity filter with the structure :
ZTZ 3T 3Z 4T 3Z 3T (ZT)6 (TZ)7 T 3Z 4T (ZT)8 (TZ)6 3T 3Z 4T 3Z 3T ZTZ
has 73 layers and 90 quarter-waves. Transmission at 13 degrees is 97%.
Ripple R=97.5% and the shape-factor S= 2.0.

This is illustrated in Fig. 9b.

To achieve better shapes for a five cavity filter, the structure:
TZT 3Z 3T 3Z 4T 3Z 3T Z 3T (ZT)5 (TZ)7 3T 3Z 2T Z 3T (ZT)7 (TZ)5 3T Z 3T 3Z 4T 3Z 3T 3Z TZT
has 73 layers and 112 quarter-waves. Transmission at 13 degrees is 91% minimum.

Ripple R=96% and the shape-factor S=1.90. A six-cavity filter with less quarter-waves has better properties as follows.

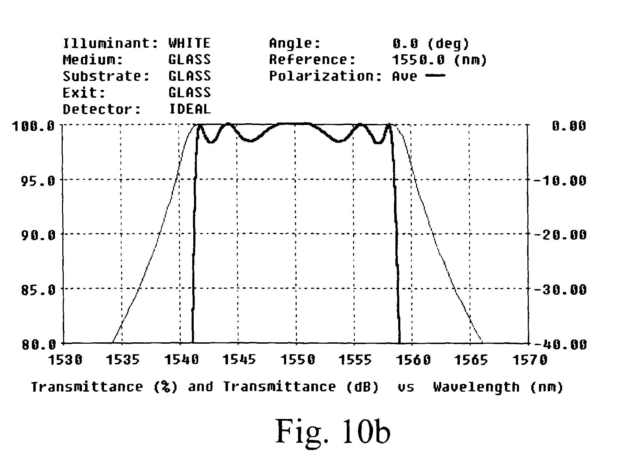

A six cavity filter with the structure:
T (ZT)2 3Z 4T (ZT)7 (TZ)8 2T Z 3T (ZT)4 Z 3T 3Z T Z 2T (ZT)8 (TZ)7 4T 3Z (TZ)2 T
has 89 layers and 107 quarter-waves. Transmission at 13 degrees is 96%.
Ripple R = 98.5% and Shape-factor S = 1.73.
Performance is illustrated in Fig. 10b.

The spectral characteristics of a filter consisting of alternating layers of Tantalum Pentoxide and Silicon Dioxide is plotted in Fig. 11b. The design is:
T 3Q 3T 4Q 3T Q (TQ)4 (QT)5 3Q T 4Q (TQ)6 (QT)4 Q 3T 4Q 3T 3Q T
which contains 51 layers with 76 quarter-waves. The transmission is more than 98.5% minimum.

Slope S = 2.2. A graph of Transmittance vs. Wavelength is shown in Fig. 11b.

This demonstrates that the basic band is practically independent of both the ratio of the indices of refraction and also the absolute values of each index of refraction. Comparisons of changing the high index with a constant low index show minor changes in the reflection value at the peak within the passband.

In summary, the filter in accordance with this invention provides substantial improvement in its output response over conventional filters. This is achieved by ensuring that the outer cavities have 4 less layers than the inner core cavities and that half-waves are added to the quarter-wave stacks (and possibly the outer cavity half-waves).

Of course numerous other embodiments and applications may be envisaged, without departing from the scope of the invention.

## Claims

1. A bandpass filter comprising a multilayer structure having a plurality of cavities (10a, 10b) including two outer cavities (10a) and one or more other inner core cavities (10b), each cavity (10a, 10b) having two quarter-wave reflecting elements comprising a single layer of material of a high refractive index or a plurality of layers of materials of alternating high and low refractive index, said elements in each cavity (10a, 10b) being separated by a half-wave layer or multiple-half-wave layer of dielectric material, each cavity (10a, 10b) being separated from an adjacent cavity (10a, 10b) by a quarter-wave layer (12) of low refractive index material, the number of layers in the one or more inner core cavities (10b) being an odd number greater than or equal to 7, **characterized in that** the outer cavities (10a) each have two less layers in each quarter-wave reflecting element than in other quarter-wave reflecting elements of the one or more inner core cavities (10b) and that at least one quarter-wave reflecting element includes at least one layer having combined thickness of a three-quarter-wave layer.

2. A bandpass filter according to claim 1, **characterized in that** said layer or layers present in either of the outer cavities (10a) are for altering the slope of the passband, and wherein said layers disposed in the inner cavities (10b) are for lessening ripple introduced by any a layer or layers having combined thickness of a three-quarter-wave layers present in any of the outer cavities (10a).

3. A bandpass filter according to claim 1 or 2, **characterized in that** the multiple half-wave layer of dielectric material of one or more inner cavities (10b) comprises fewer multiple half-waves than the multiple half-wave layer of the two outer cavities (10a).

4. A bandpass filter according claim 3, **characterized in that** the multiple half-wave layers of dielectric material of the one or more inner cavities (10b) adjacent to the outer cavities (10a) comprise fewer multiple half-waves than the multiple half-wave layer of the two outer cavities (10a).

## Patentansprüche

1. Bandpassfilter mit einem vielschichtigen Aufbau und mit einer Vielzahl von Kavitäten (10a, 10b), beinhaltend zwei äussere Kavitäten (10a) und mindestens eine davon verschiedene innere Kernkavität (10b), wobei jede Kavität (10a, 10b) zwei aus Lambda-Viertel-Schichten bestehende reflektierende Elemente aufweist, welche eine einzige Schicht aus einem Material mit hoher Brechzahl oder eine Vielzahl von Schichten aus Materialien mit abwechslungsweise hoher und niedriger Brechzahl aufweisen, diese Elemente in jeder Kavität (10a, 10b) durch eine Lambda-Halbe-Schicht oder eine Mehrfach-Lambda-Halbe-Schicht aus dielektrischem Material voneinander getrennt sind, jede dieser Kavitäten (10a, 10b) von einer benachbarten Kavität (10a, 10b) durch eine Lambda-Viertel-Schicht (12) aus einem Material mit niedriger Brechzahl getrennt ist und die Anzahl Schichten in der mindestens einen inneren Kernkavität (10b) eine ungerade Zahl grösser oder gleich Sieben ist, **dadurch gekennzeichnet**, dass die äusseren Kavitäten (10a) in jedem Lambda-Viertel-Reflektor je zwei Schichten weniger aufweisen als in anderen Lambda-Viertel-Reflektoren der mindestens einen inneren Kernkavität (10b) und dass zumindest ein Lambda-Viertel-Reflektor mindestens eine Schicht beinhaltet, welche die Gesamtdicke einer Drei-Lambda-Viertel-Schicht aufweist.

2. Bandpassfilter nach Anspruch 1, **dadurch gekennzeichnet,** dass die Schicht oder Schichten in beiden äusseren Kavitäten (10a) eine Veränderung der Steigung des Durchlassbereiches bezwecken und die in den inneren Kavitäten (10b) angeordneten Schichten eine Verminderung der Welligkeit bezwecken, welche durch eine Schicht oder Schichten eingeführt wird, welche die Gesamtdicke einer Drei-Lambda-Viertel-Schicht haben und sich in einer der äusseren Kavitäten (10a) befinden.

3. Bandpassfilter nach Anspruch 1 oder 2, **dadurch gekennzeichnet,** dass die Mehrfach-Lambda-Halbe-Schicht aus dielektrischem Material mindestens einer inneren Kavität (10b) weniger halbe Wellenlängen beinhaltet als die Mehrfach-Lambda-Halbe-Schicht der zwei äusseren Kavitäten (10a).

4. Bandpassfilter nach Anspruch 3, **dadurch gekennzeichnet,** dass jene Mehrfach-Lambda-Halbe-Schichten aus dielektrischem Material der mindestens einen inneren Kavität (10b), welche an die äusseren Kavitäten (10a) angrenzen, weniger halbe Wellenlängen beinhalten als die Mehrfach-Lambda-Halbe-Schicht der zwei äusseren Kavitäten (10a).

## Revendications

1. Filtre passe-bande comprenant une structure multicouche ayant une pluralité de cavités (10a, 10b), comprenant deux cavités extérieures (10a) et une ou plusieurs autres cavités intérieures de noyau (10b), chaque cavité (10a, 10b) ayant deux éléments réfléchissants quart d'onde comprenant une monocouche d'un matériau ayant un grand indice de réfraction, ou une pluralité de couches de matériau ayant alternativement un indice de réfraction élevé et un faible indice de réfraction, lesdits éléments de chaque cavité (10a, 10b) étant séparés par une couche demi-onde ou par une couche d'un matériau diélectrique multi-demi-onde, chaque cavité (10a, 10b) étant séparée d'une cavité adjacente (10a, 10b) par une couche quart d'onde (12) en un matériau à faible indice de réfraction, le nombre de couches se trouvant dans la ou les cavités intérieures de noyau (10 b) étant un nombre impair supérieur ou égal à 7, caractérisé en ce que chacune des cavités extérieures (10a) possède dans chaque élément réfléchissant quart d'onde deux couches de moins que dans d'autres éléments réfléchissants quart d'onde de la ou des cavités intérieures de noyau (10b), et qu'au moins un élément réfléchissant quart d'onde comprend au moins une couche ayant une épaisseur combinée égale à celle d'une couche trois quart d'onde.

2. Filtre passe-bande selon la revendication 1, caractérisé en ce que ladite ou lesdites couches présentes dans l'une ou l'autre des cavités extérieures (10a) sont destinées à modifier la pente de la bande passante, et dans lequel lesdites couches disposées dans les cavités intérieures (10b) ont pour but de diminuer l'ondulation introduite par une ou plusieurs couches quelconques ayant une épaisseur combinée égale à celle d'une couche trois quart d'onde, présente dans l'une quelconque des cavités extérieures (10a).

3. Filtre passe-bande selon la revendication 2, caractérisé en ce que la couche multi-demi-onde en un matériau diélectrique de la ou des cavités intérieures (10b) comprend un nombre de demi-ondes inférieur à celui de la couche multi-demi-onde des deux cavités extérieures (10a).

4. Filtre passe-bande selon la revendication 3, caractérisé en ce que les couches multi-demi-onde en un matériau diélectrique de la ou des cavités intérieures (10b), adjacente aux autres cavités (10a), comprennent un nombre de demi-ondes plus petit que celui de la couche multi-demi-onde des deux cavités extérieures (10a).
